# DEMANDE DE BREVET EUROPEEN

(11) **EP 4 245 198 A2**
(43) Date de publication de la demande: **20.09.2023**
(21) Numéro de dépôt: 23190963.1
(22) Date de dépôt: 10.12.2021
(51) Int. Cl.: A47J 45/08

(54) **POIGNÉE AMOVIBLE MUNIE D'UN ORGANE D'APPUI RENFORCE**

(30) Priorité: 07.01.2021 FR 2100140
(62) Demande divisionnaire de: 21213600.6
(71) Demandeur: SEB S.A., 69130 Ecully (FR)
(72) Inventeur: MONTGELARD, Michel, 69134 Ecully Cedex (FR)
(74) Mandataire: SEB Développement

(57) **Abrégé**

L'invention concerne une poignée amovible (1) destinée à coopérer avec un récipient de cuisson (60) ayant une paroi latérale qui est prolongée vers le haut par une portion recourbée vers l'extérieur comportant une extrémité libre (65), ladite poignée amovible (1) s'étendant selon une direction longitudinale (3) et comprenant un organe d'appui interne (12) et un organe d'appui externe (14) destiné à venir contre, respectivement, une surface intérieure (62) et une surface extérieure (63) de la paroi latérale, ladite poignée amovible (1) comportant un corps de préhension (2) en matière plastique qui s'étend selon la direction longitudinale (3) et qui comporte une extrémité avant (72) munie de l'organe d'appui externe (14).

Conformément à l'invention, le corps de préhension (2) comporte un renfort métallique (80) fixé sur l'extrémité avant (72) et muni d'une patte (81) qui s'étend au niveau de l'organe d'appui (14), le renfort métallique (80) et la patte (81) étant dimensionnés pour garantir la géométrie de l'assemblage poignée amovible (1) / récipient de cuisson (60) en cas de dégradation thermique de la matière plastique de l'extrémité avant (72) du corps de préhension (2).

## Description

### Domaine technique

La présente invention concerne une poignée amovible destinée à coopérer avec un récipient de cuisson, le récipient de cuisson tel une casserole, une poêle ou un fait-tout, ayant une paroi latérale qui est prolongée vers le haut par une portion recourbée vers l'extérieur.

### Etat de la technique

Il est connu du document EP1523266 une poignée amovible destinée à coopérer avec un récipient de cuisson ayant une paroi latérale qui est prolongée vers le haut par une portion recourbée vers l'extérieur comportant une extrémité libre. La poignée amovible s'étend selon une direction longitudinale et comprend un organe d'appui interne et un organe d'appui externe destiné à venir contre, respectivement, une surface intérieure et une surface extérieure de la paroi latérale. La poignée amovible comporte un corps de préhension en matière plastique qui s'étend selon la direction longitudinale et qui comporte une extrémité avant munie de l'organe d'appui externe.

Cependant, en cas de mauvaise utilisation, notamment sur un feu gaz, la matière plastique de l'organe d'appui externe peut être brulée par la flamme du feu gaz. Ainsi, la géométrie de l'organe d'appui externe est modifiée et l'assemblage correct de la poignée amovible sur le récipient de cuisson n'est plus garanti. En conséquence, le récipient de cuisson pourrait se désolidariser de la poignée amovible en cas de fortes sollicitations. La poignée amovible peut comporter une pièce métallique agencée sur une surface externe inférieure de l'extrémité avant et qui fait office de pare flamme. Mais l'organe d'appui externe peut être malgré tout dégradé thermiquement et la pièce métallique n'est pas dimensionnée pour palier à cette dégradation.

### Résumé de l'invention

La présente invention vise à remédier à ces inconvénients.

Le problème technique à la base de l'invention consiste à proposer une poignée amovible qui présente un fonctionnement sûr et fiable dans le temps.

Un autre but de l'invention est de proposer une poignée amovible destinée à coopérer avec un récipient de cuisson qui soit de conception simple et économique à mettre en oeuvre.

A cet effet, l'invention a pour objet une poignée amovible destinée à coopérer avec un récipient de cuisson ayant une paroi latérale qui est prolongée vers le haut par une portion recourbée vers l'extérieur comportant une extrémité libre, ladite poignée amovible s'étendant selon une direction longitudinale et comprenant un organe d'appui interne et un organe d'appui externe destiné à venir contre, respectivement, une surface intérieure et une surface extérieure de la paroi latérale, ladite poignée amovible comportant un corps de préhension en matière plastique qui s'étend selon la direction longitudinale et qui comporte une extrémité avant munie de l'organe d'appui externe, caractérisée en ce que le corps de préhension comporte un renfort métallique fixé sur l'extrémité avant et muni d'une patte qui s'étend au niveau de l'organe d'appui externe, le renfort métallique et la patte étant dimensionnés pour garantir la géométrie de l'assemblage poignée amovible/récipient de cuisson en cas de dégradation thermique de la matière plastique de l'extrémité avant du corps de préhension.

Par une patte qui s'étend au niveau de l'organe d'appui, on comprend que l'organe d'appui est formé en partie par l'extrémité avant et en partie par la patte.

De manière avantageuse, l'extrémité avant formant l'organe d'appui et la patte sont alignés pour être en contact avec la surface extérieure de la paroi latérale du récipient de cuisson.

Par le renfort métallique et la patte étant dimensionnés pour garantir la géométrie de l'assemblage poignée amovible/récipient en cas de dégradation thermique de la matière plastique de l'extrémité avant du corps de préhension, on comprend que le renfort métallique et la patte présentent une rigidité qui garantit la géométrie de l'assemblage poignée amovible/récipient en cas de dégradation thermique de la matière plastique de l'extrémité avant du corps de préhension.

Par le renfort métallique et la patte étant dimensionnés pour garantir la géométrie de l'assemblage poignée amovible/récipient, on comprend que si l'organe d'appui, notamment la partie en plastique, est dégradé par une mauvaise utilisation, notamment sur un feu gaz, le renfort métallique et la patte sont dimensionnés pour que la patte supporte les efforts contre la surface extérieure de la paroi latérale lors de l'utilisation du récipient de cuisson.

Ainsi, la patte du renfort métallique assure une position de l'organe d'appui externe identique et stable dans le temps même en cas de dégradation thermique de la matière plastique de l'extrémité avant du corps de préhension.

Avantageusement, l'extrémité avant comporte une face avant munie d'une portion basse et la portion basse de la face avant comporte une cavité de réception de la patte.

Ainsi, la patte et les parties de la portion basse situées à proximité de la patte forment l'organe d'appui externe.

De préférence, le renfort métallique comporte un plan de symétrie vertical passant par la direction longitudinale, la patte s'étendant de part et d'autre du plan de symétrie.

Ainsi, le renfort métallique et la patte sont répartis de manière équilibrée de part et d'autre du plan de symétrie.

Avantageusement, le renfort métallique est réalisé à partir d'une tôle d'épaisseur supérieure à 0,6 millimètre, de préférence supérieure 0,8 millimètre.

Ainsi, la résistance mécanique de la patte et du renfort métallique est suffisante pour garantir une bonne tenue dans le temps, dans tout type de conditions d'utilisation du récipient de cuisson.

De préférence, le renfort métallique s'étend sur une face externe inférieure de l'extrémité avant du corps de préhension.

Ainsi, le renfort métallique s'étend à proximité de la patte.

Par, le renfort métallique s'étend sur une face externe inférieure de l'extrémité avant du corps de préhension, on comprend que le renfort métallique s'étend au moins partiellement sur une face externe inférieure de l'extrémité avant du corps de préhension.

Avantageusement, la face externe inférieure de l'extrémité avant du corps de préhension comporte des première et deuxième extrémités supérieures et le renfort métallique comporte des premier et deuxième organes de fixation agencés au niveau des première et deuxième extrémités supérieures.

Ainsi, les premier et deuxième organes de fixation du renfort métallique sont agencés sur l'extrémité avant du corps de préhension de manière à être le plus éloignés de l'appareil de chauffage, notamment du feu gaz, pour être le moins possible affectés par une surchauffe.

De préférence, les premier et deuxième organes de fixation sont formés par des premier et deuxième retours de matière qui s'étendent le long de la direction longitudinale et vers l'intérieur du corps de préhension et les première et deuxième extrémités supérieures comportent des premier et deuxième logements de réception des premier et deuxième retours de matière.

Avantageusement, les premier et deuxième retours de matière sont agencés dans les premier et deuxième logements de réception par déformation élastique du renfort métallique.

Un tel agencement est particulièrement économique en termes de matière mise en oeuvre et de temps de montage.

De préférence, le renfort métallique recouvre majoritairement la face externe inférieure de l'extrémité avant du corps de préhension pour former un pare flamme.

Ainsi, le renfort métallique assure plusieurs fonctions.

De manière avantageuse, le renfort métallique est encastré dans l'extrémité avant.

Une telle disposition permet d'améliorer le maintien du renfort métallique dans l'extrémité avant en cas de sollicitations sur la patte.

Avantageusement, le renfort métallique entoure l'extrémité avant du corps de préhension.

De préférence, la patte est agencée entre une première portion et une deuxième portion du renfort métallique.

Ainsi la patte est facilement maintenue en position par la première portion et la deuxième portion du renfort métallique.

Avantageusement, la première portion est immobilisée sur le corps de préhension par vissage et la deuxième portion comporte un retour de matière qui est encastré dans une cavité du corps de préhension.

Ainsi, la deuxième portion munie du retour de matière et qui s'étend sur une face externe inférieure de l'extrémité avant du corps de préhension assure une reprise des efforts transmis par la patte, lors de l'utilisation du récipient de cuisson.

Avantageusement, la poignée amovible comporte une pièce de structure qui comporte l'organe d'appui interne et un organe d'appui supérieur destiné à venir contre l'extrémité libre de la portion recourbée et elle comprend un verrou mobile en translation entre une position ouverte et une position fermée, le verrou comportant une paroi de blocage destinée à être éloignée de l'organe d'appui interne dans la position ouverte du verrou et destinée à générer une force sur l'extrémité libre dans la position fermée du verrou, sous l'action d'un moyen de mise en pression.

De préférence, la poignée amovible comporte des moyens de manoeuvre du verrou à genouillère comprenant un levier qui est monté mobile en rotation sur la pièce de structure et sur le corps de préhension, une bielle et un ressort de compression formant le moyen de mise en pression.

La poussée du ressort sur le verrou s'effectue selon la direction longitudinale lorsque le verrou est en position fermé. Cette disposition permet d'adapter la position du verrou à l'épaisseur et à la longueur de l'extrémité libre.

L'invention concerne également un ensemble formé par au moins un récipient de cuisson comportant une paroi latérale qui est prolongée vers le haut par une portion recourbée vers l'extérieur comportant une extrémité libre munie d'une arête supérieure et d'une arête inférieure et une poignée amovible telle que précédemment décrite.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue en perspective d'une poignée amovible agencée sur un récipient de cuisson selon un mode particulier de réalisation de l'invention, le verrou étant en position fermée;
La figure 2 est une vue en perspective de la poignée amovible agencée sur un récipient de cuisson de la figure 1, le verrou étant en position ouverte;
La figure 3 est une vue en coupe de la poignée amovible suivant le plan de coupe vertical médian III-III de la figure 1;
La figure 4 est une vue en coupe de la poignée amovible suivant le plan de coupe vertical médian IV-IV de la figure 2;
La figure 5 est une vue en perspective du corps de préhension de la poignée amovible illustrée à la figure 1;
La figure 6 est une vue en perspective du dessous du sous ensemble formé par la pièce de structure, l'agrafe, le verrou et la bielle de la poignée amovible illustrée à la figure 1;
La figure 7 est une vue en perspective du dessus du sous ensemble illustrée à la figure 6.
La figure 8 est une vue en perspective du corps de préhension d'une variante de réalisation de la poignée amovible illustrée à la figure 1;
La figure 9 est une vue en coupe de la poignée amovible suivant le plan de coupe vertical médian IX-IX de la figure 8.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", « haut », « bas », "avant", "arrière", « longitudinal », « transversal », employés pour décrire la poignée amovible font référence à cette poignée amovible en situation d'usage, lorsqu'elle est assemblée sur un récipient de cuisson qui repose à plat sur un plan de travail.

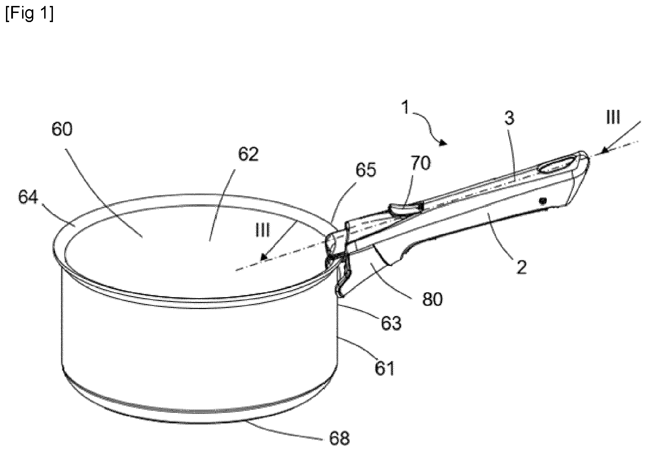

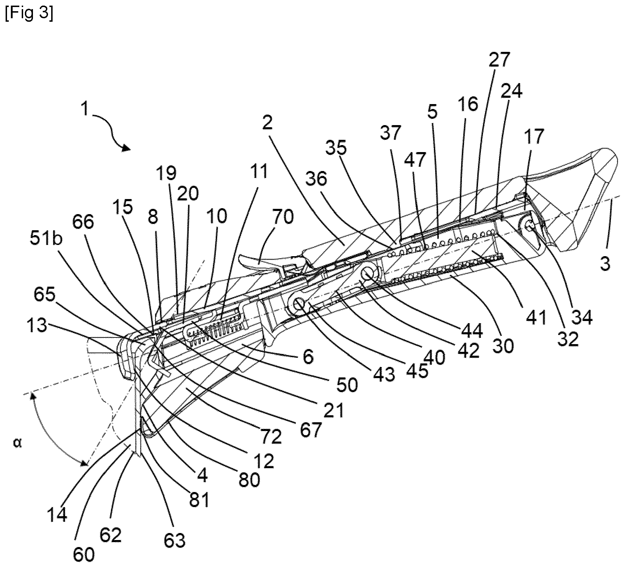

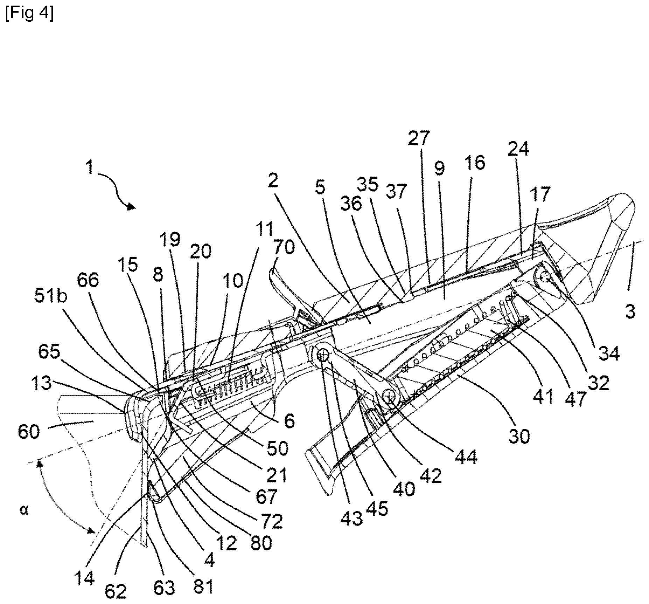

Tel que visible aux figures 1 à 5, une poignée amovible 1 est destinée à coopérer avec un récipient de cuisson 60 qui comprend une paroi de fond 68 horizontale, une paroi latérale 61 se dressant depuis la paroi de fond 68, et une portion recourbée 64 qui s'étend vers l'extérieur. La paroi latérale 61 comporte une surface intérieure 62 et une surface extérieure 63. La portion recourbée 64 prolonge la paroi latérale 61 et délimite l'ouverture supérieure du récipient de cuisson 60. La portion recourbée 64 comprend une extrémité libre 65 munie d'une arête supérieure 66 et d'une arête inférieure 67 (Fig. 3 et 4). Les arêtes supérieure 66 et inférieure 67 sont de préférence superposées dans un plan vertical.

La poignée amovible 1 s'étend selon une direction longitudinale 3. La poignée amovible 1 comporte un corps de préhension 2 qui comprend, à une extrémité avant 72 dirigée vers le récipient de cuisson 60, une face avant 4 comportant un organe d'appui externe 14 destiné à coopérer avec la surface extérieure 63 de la paroi latérale 61. Dans un plan de coupe vertical orienté selon la direction longitudinale 3 (Fig. 3 et 4), l'organe d'appui externe 14 est sensiblement vertical. La poignée amovible 1 comporte un plan médian vertical qui s'étend le long de la direction longitudinale 3 et qui forme un plan de symétrie pour la poignée amovible 1.

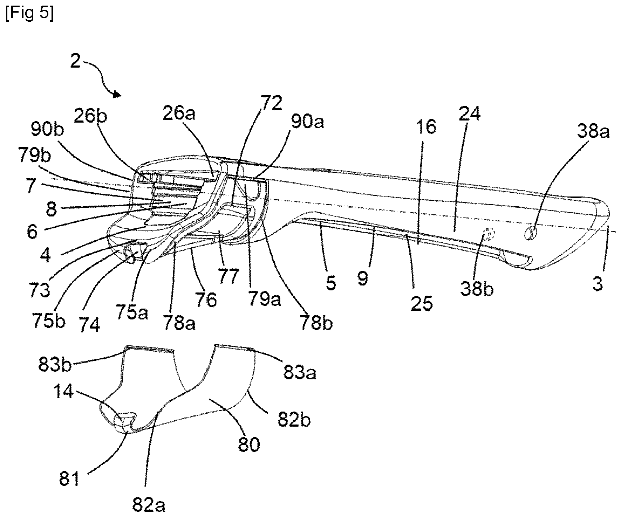

Tel que visible à la figure 5, le corps de préhension 2 s'étend selon la direction longitudinale 3. Le corps de préhension 2 est réalisé en matière plastique. De préférence la matière plastique est du type thermodurcissable, notamment une résine phénol-formaldéhyde. Le corps de préhension 2 comporte un renfort métallique 80 fixé sur l'extrémité avant 72. Le renfort métallique 80 est muni d'une patte 81 qui s'étend au niveau de l'organe d'appui 14. La face avant 4 de l'extrémité avant 72 comporte une portion basse 73. La portion basse 73 de la face avant 4 comporte une cavité 74 de réception de la patte 81. La portion basse 73 de la face avant 4 comporte deux zones d'appui 75a, 75b agencés de part et d'autre de la cavité 74. La zone d'appui 75a et la zone d'appui 75b sont agencées de manière symétrique par rapport au plan de symétrie de la poignée amovible 1. La patte 81 et les deux zones d'appui 75a, 75b forment l'organe d'appui externe 14. Avantageusement, la patte 81 et les deux zones d'appui 75a, 75b sont alignés pour être en contact simultanément avec la surface extérieure 63 de la paroi latérale 61 du récipient de cuisson 60. Dans une variante de réalisation, la patte 81 et les deux zones d'appui 75a, 75b sont décalés de quelques dixièmes de millimètres pour favoriser le contact des deux zones d'appui 75a, 75b avec la surface extérieure 63 de la paroi latérale 61 du récipient de cuisson 60. La patte 81 n'entre en contact avec la surface extérieure 63 de la paroi latérale 61 que lorsque les deux zones d'appui 75a, 75b sont usées ou dégradées thermiquement.

L'extrémité avant 72 du corps de préhension 2 comporte une face externe inférieure 76. Le renfort métallique 80 s'étend sur pratiquement toute la face externe inférieure 76 pour former un pare flamme. L'extrémité avant 72 comporte un logement 77 dans lequel le renfort métallique 80 est encastré. Le logement 77 comporte un épaulement avant 78a et un épaulement arrière 78b. Le renfort métallique 80 comporte un bord avant 82a qui est agencé dans l'épaulement avant 78a et un bord arrière 82b qui est agencé dans l'épaulement arrière 78b. La cavité 74 de réception de la patte 81 est reliée au logement 77. La patte 81 s'étend depuis le bord avant 82a du renfort métallique 80 vers l'avant puis vers le haut, le long de la face avant 4.

La face externe inférieure 76 de l'extrémité avant 72 du corps de préhension 2 comporte des première et deuxième extrémités supérieures 79a, 79b agencées de part et d'autre du plan de symétrie de la poignée amovible 1. Le renfort métallique 80 comporte des premier et deuxième organes de fixation 83a, 83b agencés au niveau des première et deuxième extrémités supérieures 79a, 79b. Les premier et deuxième organes de fixation sont formés par des premier et deuxième retours de matière 83a, 83b qui s'étendent le long de la direction longitudinale 3 et vers l'intérieur du corps de préhension 2. Les première et deuxième extrémités supérieures 79a, 79b comportent des premier et deuxième logements de réception 90a, 90b des premier et deuxième retours de matière 83a, 83b. Les premier et deuxième retours de matière 83a, 83b sont agencés dans les premier et deuxième logements de réception 90a, 90b par déformation élastique du renfort métallique 80. Le renfort métallique 80 est réalisé à partir d'une tôle d'acier inoxydable d'épaisseur égale à 0,6 millimètre.

Conformément aux figures 3, 4, 6 et 7, la poignée amovible 1 comporte une agrafe 50 qui est réalisée en matériau métallique. L'agrafe 50 comprend deux pattes 51a, 51b agencées de part et d'autre d'un plan médian vertical. Les deux pattes 51a, 51b forment un organe d'appui supérieur 15 destinée à coopérer avec l'arête supérieure 66 de l'extrémité libre 65 (Fig. 3). Les deux pattes 51a, 51b s'étendent le long de la direction longitudinale 3, au niveau de l'extrémité avant.

La poignée amovible 1 comporte une pièce de structure 10 qui est réalisée en matériau métallique. La pièce de structure 10 est sensiblement plane et comporte une patte d'extrémité 13. La patte d'extrémité 13 s'étend vers le bas et comporte une paroi interne formant un organe d'appui interne 12 destiné à coopérer avec la surface intérieure 62 de la paroi latérale 61.

L'organe d'appui interne 12 et l'organe d'appui externe 14 sont décalées selon la direction longitudinale 3 (Fig.3) pour permettre l'introduction de la paroi latérale 61 et de l'extrémité libre 65 lors de l'assemblage de la poignée amovible 1 sur le récipient de cuisson 60.

La poignée amovible 1 comporte un organe de verrouillage formé par un verrou 20 mobile en translation selon la direction longitudinale 3 entre une position ouverte (Fig.4) et une position fermée (Fig.3). Le verrou 20 comporte à une extrémité avant une paroi de blocage 21. Tel que visible à la figure 4, dans la position ouverte du verrou 20, la paroi de blocage 21 est destinée à être éloignée de l'organe d'appui supérieur 15 pour permettre l'introduction de la paroi latérale 61 entre les organes d'appui interne 12 et externe 14 et permettre à l'arête supérieure 66 de l'extrémité libre 65 de venir contre l'organe d'appui supérieur 15.

Tel que visible à la figure 3, dans la position fermée du verrou 20, la paroi de blocage 21 est destinée à prendre appui contre l'arête inférieure 67 de l'extrémité libre 65 et ainsi bloquer l'arête supérieure 66 contre l'organe d'appui supérieur 15. Dans un plan de coupe vertical comprenant la direction longitudinale 3, une droite appartenant à la paroi de blocage 21 et la direction longitudinale forment un angle α compris entre 40 et 50°, de préférence 45°.

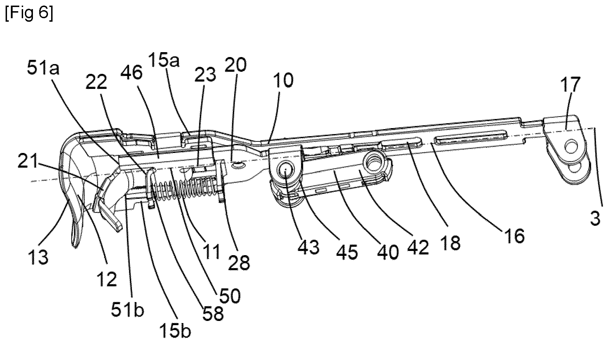

Tel que visible à la figure 6, la poignée amovible 1 comporte un moyen de rappel du verrou 20 disposé entre une patte 58 portée par l'agrafe 50 et une butée 28 portée par le verrou 20. Le moyen de rappel est formé par un ressort 11. Le ressort 11 travaille en compression lorsque le verrou 20 est en position fermée. Le ressort 11 est adapté à appliquer une force de rappel sur la butée 28 pour entraîner le verrou 20 vers sa position ouverte.

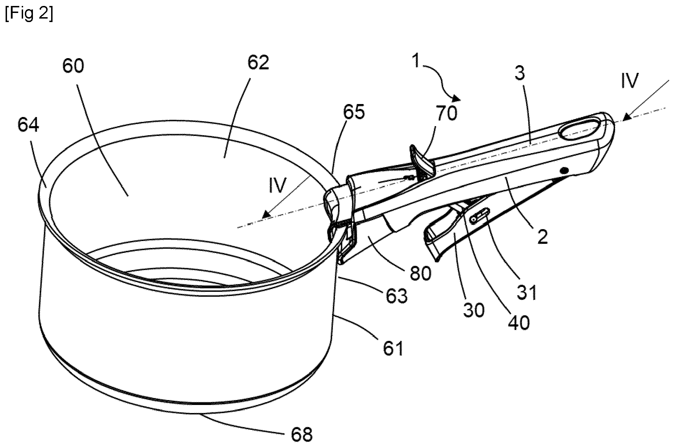

Conformément aux figures 3 et 4, La poignée amovible 1 comporte des moyens de déplacement de l'organe de verrouillage formés par le verrou 20. Les moyens de déplacement comportent un levier 30 qui est monté pivotant sur la pièce de structure 10 et le corps de préhension 2 autour d'un axe 34 de pivotement s'étendant selon une direction transversale, perpendiculaire à la direction longitudinale 3, et une bielle 40 qui permet le déplacement du verrou 20 quand le levier 30 est pivoté. La bielle 40 est montée de façon pivotante, par une première extrémité 45 au verrou 20 autour d'un axe 43, et par une seconde extrémité 42 au levier 30 autour d'un axe 44 qui est monté coulissant dans une ouverture oblongue 31 réalisée dans le levier 30 (Fig.2).

Le levier 30 est mobile entre une position de fermeture et une position d'ouverture en passant par une position intermédiaire d'équilibre instable. Dans la position de fermeture du levier 30, le verrou 20 est en position fermée et dans la position d'ouverture du levier 30, le verrou 20 est dans la position ouverte. En outre, les moyens de déplacement comprennent également un ressort 47 qui est disposé sur une tige 41. L'axe 44 est inséré dans la tige 41 et dans l'ouverture oblongue 31. Le ressort 47 est monté coulissant sur la tige 41 et en appui sur une paroi transversale 32 du levier 30. Ce ressort 47 de compression repousse l'axe 44 via la tige 41 pour permettre un ajustement de la position du verrou 20 en position fermée à l'épaisseur de la paroi latérale 61 du récipient de cuisson 60.

Conformément à la figure 3, dans la position de fermeture du levier 30, l'axe 44 autour duquel la seconde extrémité 42 pivote est situé au-dessus d'une ligne passant par l'axe de pivotement 34 et l'axe 43. La seconde extrémité 42 est maintenue en contact de la pièce de structure 10 sous l'action du ressort 47 de compression. Ainsi, le verrou 20 reste naturellement dans sa position fermée, sans que l'utilisateur ait à maintenir un quelconque effort sur la poignée amovible 1. La position intermédiaire d'équilibre instable du levier 30 est atteinte lorsque l'axe 44 autour duquel la seconde extrémité 42 pivote, est déplacé sous la ligne passant par l'axe de pivotement 34 et l'axe 43.

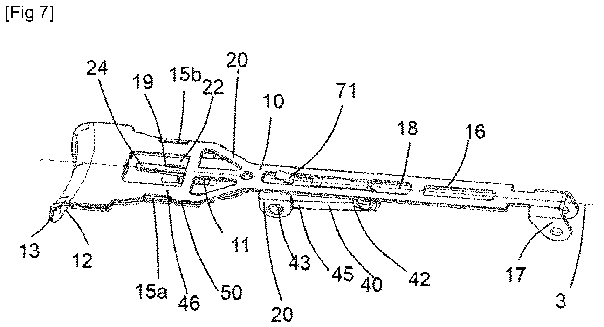

Tel que visible aux figures 6 et 7, la pièce de structure 10, l'agrafe 50 et le verrou 20 forment un sous ensemble. Le verrou 20 comporte une portion centrale 22 sensiblement plane qui s'étend selon la direction longitudinale 3. L'agrafe 50 coiffe la portion centrale 22 du verrou 20 et est fixée à la pièce de structure 10 par soudage laser. L'agrafe 50 et la pièce de structure 10 forment un logement 23 de réception et de guidage en translation du verrou 20. Le sous ensemble comporte également le ressort 11, la bielle 40 et l'axe 43.

La pièce de structure 10 munie de l'agrafe 50 comporte une partie 46 munie de deux ailes latérales 15a, 15b (Fig. 7) agencées à proximité de la patte d'extrémité 13. La pièce structure 10 comporte une partie prenant la forme d'une lame 16 qui s'étend le long de la direction longitudinale 3 à partir de la partie 46 munie des deux ailes latérales 15a, 15b jusqu'à une extrémité arrière qui comprend une chape 17 en forme de U inversée. La lame 16 comporte une ouverture traversante 18, agencée à proximité de l'extrémité arrière. La pièce de structure 10 comporte une patte 19 (Fig. 7) munie d'une extrémité libre 24 déformée vers le haut, transversalement à la direction longitudinale 3.

Tel que visible à la figure 5, le corps de préhension 2 comporte un logement 5 de réception du sous ensemble. Le logement 5 comporte une portion tubulaire 6 qui s'étend le long de la direction longitudinale 3 et dont une extrémité libre 7 débouche sur la face avant 4 pour former un orifice 8 d'introduction. L'orifice 8 d'introduction est agencé au-dessus de l'organe d'appui externe 14. Le logement 5 comporte une portion en forme de U inversé 9 qui s'étend le long de la direction longitudinale 3 dans le prolongement de la portion tubulaire 6. La portion en forme de U inversé 9 comprend une ouverture inférieure 25 d'introduction et de réception du levier 30. Le logement 5 dans la portion tubulaire 6 comporte deux rainures 26a, 26b latérales supérieures qui s'étendent le long de la direction longitudinale 3. Les deux ailes latérales 15a, 15b de la pièce de structure 10 sont destinées à coulisser dans les deux rainures 26a, 26b lors de l'insertion du sous ensemble dans le logement 5, plus particulièrement dans la portion tubulaire 6. Le logement 5 comporte une face supérieure 27 munie d'un ergot 35 (Fig. 3 et 4). L'ergot 35 est agencé dans la portion en forme de U inversé 9. L'ergot 35 comporte une face inclinée 36 destinée à faire fléchir élastiquement la lame 16 lors de l'assemblage jusqu'à ce que l'ergot 35 pénètre dans l'ouverture traversante 18 en fin d'insertion. L'ergot 35 comporte une face verticale 37 qui coopère avec l'ouverture traversante 18 pour empêcher l'extraction du sous-ensemble du corps de préhension 2. La lame 16 munie de l'ouverture traversante 18 et l'ergot 35 forment un dispositif d'auto-verrouillage du sous ensemble dans le corps de préhension 2. L'assemblage du levier 30 est réalisé par l'insertion selon une direction transversale, perpendiculaire à la direction longitudinale 3 de l'axe 34 dans deux perforations 38a, 38b (Fig. 5) du corps de préhension 2, dans la chape 17 et dans le levier 30. Un tel assemblage assure le maintien en position de l'ergot 35 dans l'ouverture traversante 18.

Tel que visible sur les figures 1 à 4, la poignée amovible 1 comprend un bouton d'ouverture 70 qui permet de faire passer le levier 30 initialement dans sa position de fermeture au-delà de sa position intermédiaire d'équilibre instable. Le bouton d'ouverture 70 est agencé sur une face supérieure du corps de préhension 2. Le bouton d'ouverture 70 est mobile en rotation autour d'un axe transversal, horizontal à la direction longitudinale 3 de la poignée amovible 1. Le bouton d'ouverture 70 est mobile entre une position abaissée de repos dans laquelle le levier 30 est dans sa position de fermeture, une position relevée intermédiaire dans laquelle le levier 30 est dans sa position intermédiaire d'équilibre instable et une position relevée dans laquelle le levier 30 est dans sa position d'ouverture. Un ressort de maintien 71 (Fig. 7) du bouton d'ouverture 70 dans sa position relevée est agencé sur la pièce de structure 10.

En fonctionnement, pour assembler la poignée amovible 1 sur le récipient de cuisson 60, l'utilisateur saisit le corps de préhension 2 et amène le verrou 20 dans sa position ouverte. Pour cela, il fait pivoter avec le pouce le bouton d'ouverture 17 de la position abaissée de repos dans laquelle le levier 30 est dans sa position de fermeture à la position relevée dans laquelle le levier 30 est dans sa position d'ouverture. Le passage du levier 30 de sa position de fermeture à sa position d'ouverture provoque par l'intermédiaire de la bielle 40 le déplacement du verrou 20 de sa position fermée à sa position ouverte. Il introduit ensuite l'extrémité libre 65 de la portion recourbée 64 entre l'organe d'appui interne 12 et l'organe d'appui externe 14 pour amener la surface intérieure 62 de la paroi latérale 61 contre l'organe d'appui interne 12 et la surface extérieure 63 contre l'organe d'appui externe 14, et également amener l'arête supérieure 66 contre les deux pattes 51a, 51b. Ensuite, il appuie sur le levier 30 pour le faire passer de sa position d'ouverture à sa position de fermeture et ainsi entrainer le verrou 20 de sa position ouverte vers sa position fermée. La paroi de blocage 21 prend alors appui contre l'arête inférieure 67 de l'extrémité libre 65 et ainsi bloque l'arête supérieure 66 contre les deux pattes 51a, 51b. La patte 81 du renfort métallique 80 et les deux zones d'appui 75a, 75b qui forment l'organe d'appui externe 14 sont en contact avec la surface extérieure 63 de la paroi latérale 61 du récipient de cuisson 60. En cas de dégradation thermique de l'extrémité avant 72 du corps de préhension 2, notamment des deux zones d'appui 75a, 75b, la patte 81 forme à elle seule l'organe d'appui externe 14 pour conserver la géométrie de l'assemblage poignée amovible/récipient de cuisson.

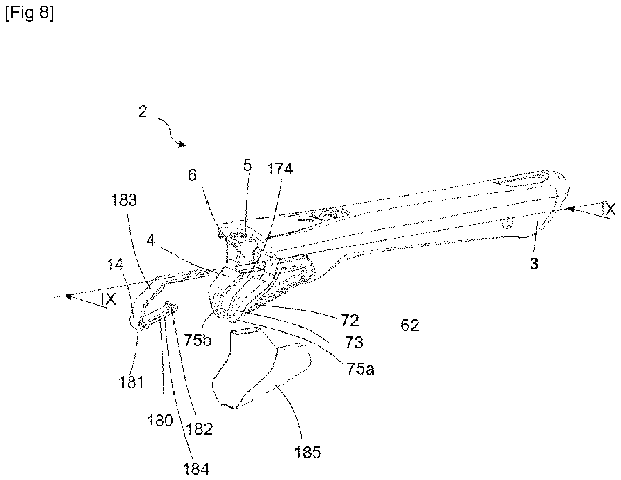

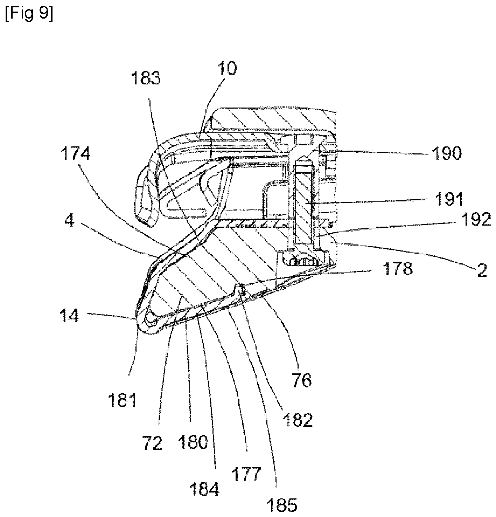

Dans une variante de réalisation illustrée aux figures 8 et 9, le corps de préhension 2 comporte un renfort métallique 180 fixé sur l'extrémité avant 72. Le renfort métallique 180 est muni d'une patte 181 qui s'étend au niveau de l'organe d'appui 14. La face avant 4 de l'extrémité avant 72 comporte une cavité 174 qui se prolonge dans la portion tubulaire 6 du logement 5, le long de la direction longitudinale 3. La cavité 174 forme un logement de réception de la patte 181 et d'une première portion 183 du renfort métallique 180. La portion basse 73 de la face avant 4 comporte deux zones d'appui 75a, 75b agencées de part et d'autre de la cavité 174. La zone d'appui 75a et la zone d'appui 75b sont agencées de manière symétrique par rapport au plan de symétrie de la poignée amovible 1. La patte 181 et les deux zones d'appui 75a, 75b forment l'organe d'appui externe 14. De préférence, la patte 181 n'entre en contact avec la surface extérieure 63 de la paroi latérale 61 que lorsque les deux zones d'appui 75a, 75b sont usées ou dégradées thermiquement. Le renfort métallique 180 s'étend sur la face externe inférieure 76. L'extrémité avant 72 comporte un logement 177 (Fig. 9) dans lequel une deuxième portion 184 du renfort métallique 180 est encastrée. Le logement 177 comporte une cavité 178. Le renfort métallique 180 comporte un retour de matière 182 qui est agencé dans la cavité 178. Le renfort métallique 180 entoure ainsi l'extrémité avant 72. Le renfort métallique est assemblé sur l'extrémité avant 72 par déformation élastique, notamment la deuxième portion 184 qui s'étend sur la face externe inférieure 76 et qui comporte le retour de matière 182.

Tel que visible à la figure 9, la pièce de structure 10 comporte un pion cylindrique 190 muni d'un taraudage destiné à coopérer avec une vis 191. L'extrémité avant 72 comporte un trou de passage 192 de la vis 191. La deuxième portion 184 du renfort métallique 180 est complètement immobilisée sur l'extrémité avant 72 par serrage de la vis 191 dans le taraudage du pion cylindrique 190.

Dans ce mode de réalisation, le corps de préhension 2 comporte un pare flamme 185 qui est dissocié du renfort métallique 180.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une première variante de réalisation, le corps de préhension 2 comporte une pièce de rigidification agencée derrière le renfort métallique 80 au niveau de la patte 81. La pièce de rigidification s'étend le long de la direction longitudinale 3 et peut être fixée au renfort métallique ou à l'extrémité avant 72. La pièce de rigidification est réalisée en un matériau résistant à la flamme et permet de maintenir la géométrie de la patte 81.

Ainsi, dans une deuxième variante de réalisation, le renfort métallique 80 est fixé sur le corps de préhension 2 par vissage. Les premier et deuxième organes de fixation sont formés par des première et deuxième pattes munies chacune d'une perforation de passage d'une vis et les première et deuxième extrémités supérieures 79a, 79b comportent des premier et deuxième logements de réception des première et deuxième pattes. Les deux vis plaquent les première et deuxième pattes sur le corps de préhension par vissage directement dans le corps de préhension 2 ou dans la pièce de structure 10.

## Revendications

1. Poignée amovible (1) destinée à coopérer avec un récipient de cuisson (60) ayant une paroi latérale (61) qui est prolongée vers le haut par une portion recourbée (64) vers l'extérieur comportant une extrémité libre (65), ladite poignée amovible (1) s'étendant selon une direction longitudinale (3) et comprenant un organe d'appui interne (12) et un organe d'appui externe (14) destiné à venir contre, respectivement, une surface intérieure (62) et une surface extérieure (63) de la paroi latérale (61), ladite poignée amovible (1) comportant un corps de préhension (2) en matière plastique qui s'étend selon la direction longitudinale (3) et qui comporte une extrémité avant (72) munie de l'organe d'appui externe (14), **caractérisée en ce que** le corps de préhension (2) comporte un renfort métallique (80, 180) fixé sur l'extrémité avant (72) et muni d'une patte (81, 181) qui s'étend au niveau de l'organe d'appui (14) et **en ce que** le renfort métallique (80, 180) entoure l'extrémité avant (72) du corps de préhension (2), le renfort métallique (80, 180) et la patte (81, 181) étant dimensionnés pour garantir la géométrie de l'assemblage poignée amovible (1) / récipient de cuisson (60) en cas de dégradation thermique de la matière plastique de l'extrémité avant (72) du corps de préhension (2) .

2. Poignée amovible (1) selon la revendication 1, **caractérisée en ce que** l'extrémité avant (72) comporte une face (4) avant munie d'une portion basse (73) et **en ce que** la portion basse (73) de la face avant (4) comporte une cavité (74) de réception de la patte (81, 181).

3. Poignée amovible (1) selon l'une quelconque des revendications 1 à 2, **caractérisée en ce que** le renfort métallique (80, 180) comporte un plan de symétrie vertical passant par la direction longitudinale 3, la patte (81, 181) s'étendant de part et d'autre du plan de symétrie.

4. Poignée amovible (1) selon l'une quelconque des revendications 1 à 3, **caractérisée en ce que** le renfort métallique (80, 180) est réalisé à partir d'une tôle d'épaisseur supérieure à 0,6 millimètre.

5. Poignée amovible (1) selon l'une quelconque des revendications 1 à 4, **caractérisée en ce que** le renfort métallique (80, 180) s'étend sur une face externe inférieure (76) de l'extrémité avant (72) du corps de préhension (2).

6. Poignée amovible (1) selon la revendication 5, **caractérisée en ce que** la face externe inférieure (76) de l'extrémité avant (72) du corps de préhension (2) comporte des première et deuxième extrémités supérieures (79a, 79b) et **en ce que** le renfort métallique (80) comporte des premier et deuxième organes de fixation (83a, 83b) agencés au niveau des première et deuxième extrémités supérieures (79a, 79b).

7. Poignée amovible (1) selon la revendication 6, **caractérisée en ce que** les premier et deuxième organes de fixation sont formés par des premier et deuxième retours de matière (83a, 83b) qui s'étendent le long de la direction longitudinale (3) et vers l'intérieur du corps de préhension (2) et **en ce que** les première et deuxième extrémités supérieures (79a, 79b) comportent des premier et deuxième logements de réception (90a, 90b) des premier et deuxième retours de matière (83a, 83b).

8. Poignée amovible (1) selon la revendication 7, **caractérisée en ce que** les premier et deuxième retours de matière (83a, 83b) sont agencés dans les premier et deuxième logements de réception (90a, 90b) par déformation élastique du renfort métallique (80).

9. Poignée amovible (1) selon l'une quelconque des revendications 5 à 8, **caractérisée en ce que** le renfort métallique (80) recouvre majoritairement la face externe inférieure (76) de l'extrémité avant (72) du corps de préhension (2) pour former un pare flamme.

10. Poignée amovible (1) selon l'une quelconque des revendication1 à 9, **caractérisée en ce que** la patte (181) est agencée entre une première portion (183) et une deuxième portion (184) du renfort métallique (180).

11. Poignée amovible (1) selon la revendication 10, **caractérisée en ce que** la première portion (183) est immobilisée sur le corps de préhension (2) par vissage et **en ce que** la deuxième portion (184) comporte un retour de matière (182) qui est encastré dans une cavité (178) du corps de préhension 2.

12. Poignée amovible (1) selon l'une quelconque des revendications 1 à 11, **caractérisée en ce qu'**elle comporte une pièce de structure (10) qui comporte l'organe d'appui interne (12) et un organe d'appui supérieur (15) destiné à venir contre l'extrémité libre (65) de la portion recourbée (64) et **en ce qu'**elle comprend un verrou (20) mobile en translation entre une position ouverte et une position fermée, le verrou (20) comportant une paroi de blocage (21) destinée à être éloignée de l'organe d'appui interne (12) dans la position ouverte du verrou (20) et destinée à générer une force sur l'extrémité libre (65) dans la position fermée du verrou (20), sous l'action d'un moyen de mise en pression (47).

13. Poignée amovible (1) selon la revendication 12, **caractérisée en ce qu'**elle comporte des moyens de manoeuvre du verrou (20) à genouillère comprenant un levier (30) qui est monté mobile en rotation sur la pièce de structure (10) et sur le corps de préhension (2), une bielle (40) et un ressort (47) de compression formant le moyen de mise en pression.

14. Ensemble formé par au moins un récipient de cuisson (60) comportant une paroi latérale (61) qui est prolongée vers le haut par une portion recourbée (64) vers l'extérieur comportant une extrémité libre (65) munie d'une arête supérieure (66) et d'une arête inférieure (67) et une poignée amovible (1) selon l'une quelconque des revendications 1 à 13.
